# EUROPEAN PATENT APPLICATION

(11) **EP 4 246 435 A1**
(43) Date of publication of application: **20.09.2023**
(21) Application number: 21907253.5
(22) Date of filing: 24.11.2021
(51) Int. Cl.: G06T 7/10, G02B 27/01, G06F 3/01, G06T 19/20

(54) **DISPLAY METHOD AND APPARATUS BASED ON AUGMENTED REALITY, AND DEVICE AND STORAGE MEDIUM**

(30) Priority: 18.12.2020 CN 202011508594
(71) Applicant: Lemon Inc., Grand Cayman, KY1-1205 (KY)
(72) Inventor: GAO, Yaxi, Los Angeles, California 90066 (US); SUN, Chenyu, Los Angeles, California 90066 (US); YANG, Xiao, Los Angeles, California 90066 (US); CHEN, Zhili, Los Angeles, California 90066 (US); LUO, Linjie, Los Angeles, California 90066 (US); LIU, Jing, Los Angeles, California 90066 (US); GUO, Hengkai, Beijing 100190 (CN); LI, Huaxia, Beijing 100190 (CN); KIM, Hwankyoo Shawn, Culver City, California 90230 (US); YANG, Jianchao, Los Angeles, California 90066 (US)
(74) Representative: Dentons UK and Middle East LLP
(86) International application number: PCT/SG2021/050721
(87) International publication number: WO 2022/132033

(57) **Abstract**

Embodiments of the present disclosure provide a display method and apparatus based on augmented reality, a device, and a storage medium, the method includes receiving a first video; acquiring a video material by segmenting a target object from the first video; acquiring and displaying a real scene image, where the real scene image is acquired by an image collection apparatus; and displaying the video material at a target position of the real scene image in an augmented manner and playing the video material. Since the video material is acquired by receiving the first video and segmenting the target object from the first video, the video material may be set according to the needs of the user, so as to meet the purpose that the user customizes the loading and displaying of the video material, the customized video material is displayed on the real scene image in a manner of augmented reality, forming the video effect that align with the user's conception, enhancing the flexibility of the video creation, and improving the video expressiveness.

## Description

The present disclosure claims priority to Chinese Patent Application No. 202011508594.9, filed with the China National Intellectual Property Administration on December 18, 2020 and entitled "DISPLAY METHOD AND APPARATUS BASED ON AUGMENTED REALITY, DEVICE, AND STORAGE MEDIUM", which is incorporated herein by reference in its entirety.

### TECHNICAL FIELD

Embodiments of the present disclosure relate to a field of computer and network communication technology, and in particular, to a display method and apparatus based on augmented reality, a device, and a storage medium.

### BACKGROUND

For a video software and platform, a video creation function is one of the core functions of the video software. The richness, diversity, and interest of the video creation function are important factors that attract users and video creators to use this video software.

At present, when users need to add a video special effect in the shooting environment during the process of using the video creation function, only fixed images or video materials provided by the platform can be chosen.

However, due to the limited number of images or video materials, the user is unable to fully set up special effects for the real scene image of the shooting environment according to the expected concept when creating a video, resulting in poor flexibility of the video creation and affecting the video expressiveness.

### SUMMARY

Embodiments of the present disclosure provide a display method and apparatus based on augmented reality, a device, and a storage medium to overcome the problems of the poor flexibility of the video creation and affecting the video expressiveness.

In a first aspect, an embodiment of the present disclosure provides a display method based on augmented reality, including:
receiving a first video;
acquiring a video material by segmenting a target object from the first video;
acquiring and displaying a real scene image, where the real scene image is acquired by an image collection apparatus; and
displaying the video material at a target position of the real scene image in an augmented manner and playing the video material.

In a second aspect, an embodiment of the present disclosure provides a display apparatus based on augmented reality, including:
a receiving unit, configured to receive a first video;
an acquiring unit, configured to acquire a video material by segmenting a target object from the first video; and
a displaying unit, configured to acquire and display a real scene image, and display the video material at a target position of the real scene image in an augmented manner and play the video material, where the real scene image is acquired by an image collection apparatus.

In a third aspect, an embodiment of the present disclosure provides an electronic device, including: at least one processor and memory;
the memory has a computer-executable instruction stored therein;
the at least one processor executes the computer-executable instruction stored in the memory to enable the at least one processor to perform the display method based on augmented reality described in the first aspect above and various possible designs of the first aspect.

In a fourth aspect, an embodiment of the present disclosure provides a computer readable storage medium storing a computer-executable instruction, when the computer-executable instruction is executed by a processor, the display method based on augmented reality described in the first aspect above and various possible designs of the first aspect is implemented.

In a fifth aspect, an embodiment of the present disclosure provides a computer program product including a computer program, when the computer program is executed by a processor, the display method based on augmented reality described in the first aspect above and various possible designs of the first aspect is implemented.

In a sixth aspect, an embodiment of the present disclosure provides a computer program, when the computer program is executed by a processor, the display method based on augmented reality described in the first aspect above and various possible designs of the first aspect is implemented.

The embodiments provide a display method and apparatus based on augmented reality, a device, and a storage medium, the method includes receiving a first video; acquiring a video material by segmenting a target object from the first video; acquiring and displaying a real scene image, where the real scene image is acquired by an image collection apparatus; and displaying the video material at a target position of the real scene image in an augmented manner and playing the video material. Since the video material is acquired by receiving the first video and segmenting the target object from the first video, the video material may be set according to the needs of the user, so as to meet the purpose that the user customizes the loading and displaying of the video material, the customized video material is displayed on the real scene image in a manner of augmented reality, forming the video special effect that align with the user's conception, enhancing the flexibility of the video creation, and improving the video expressiveness.

### BRIEF DESCRIPTION OF DRAWINGS

In order to illustrate the embodiments of the present disclosure or the technical solutions in the prior art more clearly, the following briefly introduces the accompanying drawings that need to be used in the description of the embodiments or the prior art. Obviously, the accompanying drawings in the following description are some embodiments of the present disclosure, and for those of ordinary skill in the art, other accompanying drawings may also be obtained from these accompanying drawings without any creative work.
FIG. 1 is an example diagram of a video shooting process in the prior art.
FIG. 2 is a first flow schematic diagram of a display method based on augmented reality provided by an embodiment of the present disclosure.
FIG. 3 is a schematic diagram of receiving a first video provided by an embodiment of the present disclosure.
FIG. 4 is another schematic diagram of receiving a first video provided by an embodiment of the present disclosure.
FIG. 5 is a schematic diagram of segmenting a target object from the first video provided by an embodiment of the present disclosure.
FIG. 6 is a schematic diagram of playing a video material at a target position of a real scene image provided by an embodiment of the present disclosure.
FIG. 7 is a second flow schematic diagram of a display method based on augmented reality provided by an embodiment of the present disclosure.
FIG. 8 is a schematic diagram that a user inputs a second user instruction provided by an embodiment of the present disclosure.
FIG. 9 is a flow schematic diagram of step S206 in an embodiment shown in FIG. 7.
FIG. 10 is a schematic diagram of playing a video material at different display angles provided by an embodiment of the present disclosure.
FIG. 11 is another schematic diagram of playing a video material at different display angles provided by an embodiment of the present disclosure.
FIG. 12 is a structural block diagram of a display apparatus based on augmented reality provided by an embodiment of the present disclosure.
FIG. 13 is a schematic diagram of a hardware structure of an electronic device provided by an embodiment of the present disclosure.

### DESCRIPTION OF EMBODIMENTS

In order to make the purposes, technical solutions and advantages of the embodiments of the present disclosure more clear, the technical solutions in the embodiments of the present disclosure will be described clearly and completely below in combination with the accompanying drawings in the embodiments of the present disclosure. Obviously, the described embodiments are part of the embodiments of the present disclosure, not all of them. Based on the embodiments in the present disclosure, all other embodiments obtained by an ordinary person skilled in the art without paying creative work all belong to the protection scope of the present disclosure.

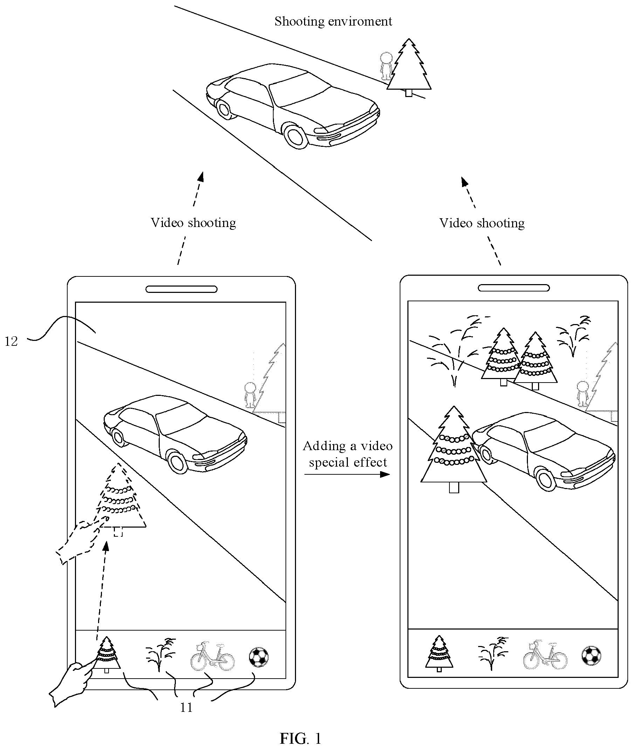

Referring to FIG. 1, which is an example diagram of a video shooting process in a prior art. In the prior art, when a user needs to add video special effects for a real scene image of the shooting environment during the process of the video shooting via a terminal device, such as a smartphone, one possible implementation method is to select a number of the video materials 11 provided by the video software in the video special effects library provided by the video software, add the video materials 11 to the real scene image 12 displayed by the terminal device, generate a shooting environment image with video special effects, and then create a video, so as to get a more creative and expressive video.

However, since the user can only use a fixed number of video materials preset in the video software in the prior art, the video materials provided in the material library often cannot meet the usage needs of the user when shooting a video of a complex scene. Therefore, the video shot by the user using fixed materials cannot fully fulfill the user's conception, which leading to a decrease of the expressiveness of the video. Embodiments of the present disclosure provide a display method based on augmented reality to solve the above problems.

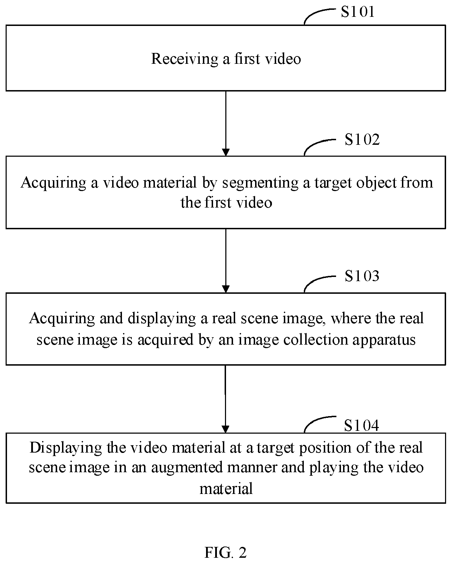

Referring to FIG. 2, which is a first flow schematic diagram of a display method based on augmented reality provided by an embodiment of the present disclosure. This embodiment can be applied to a terminal device, such as a smartphone and other terminal devices. The display method based on augmented reality includes the following steps.

S101: receiving a first video.

Specifically, the first video may include a video containing a video material of interest to the user. For example, a dance performance video, a singing performance video, an animation video, etc. In one possible implementation, the video material may be a portrait video material. In another possible implementation, the video material may also be an object video material, for example, the first video may be a racing video, where the motional race car is the video material; additionally, in another possible implementation, the video material may also be a cartoon animation video material, an animal video material, etc., the specific implementation form of the first video will not be elaborated here.

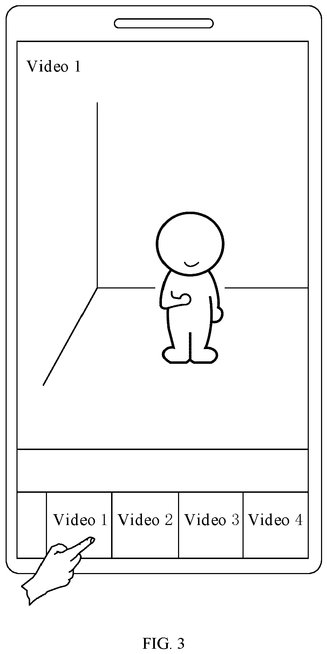

Furthermore, in a possible implementation, the first video material is a video shot by the user in advance and stored in the terminal device, which may also be uploaded directly by the user through a storage media or downloaded through a network and stored in the terminal device. FIG. 3 is a schematic diagram of receiving a first video provided by an embodiment of the present disclosure, as shown in FIG. 3, the manner of receiving a first video includes: the user selects a local video stored in the terminal device by clicking on the user interface (User Interface, UI) of the terminal device, as shown in FIG. 3, selecting video 1 as the first video from the locally stored video 1, video 2, video 3, and video 4 and uploading it, thus the terminal device realizes the receiving process of the first video.

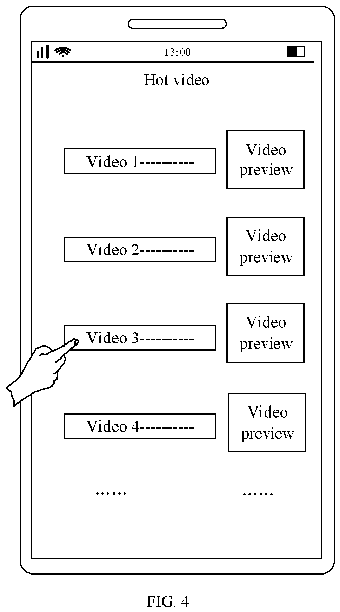

FIG. 4 is another schematic diagram of receiving a first video provided by an embodiment of the present disclosure. As shown in FIG. 4, the first video is stored in a server, the terminal receives and displays the first video information sent from the server side, more specifically, such as the title and preview image of the first video, the user downloads the first video from the server by clicking the title or preview image of the first video displayed on the terminal device, thus enabling the terminal device to receive the first video.

S102: acquiring a video material by segmenting a target object from the first video.

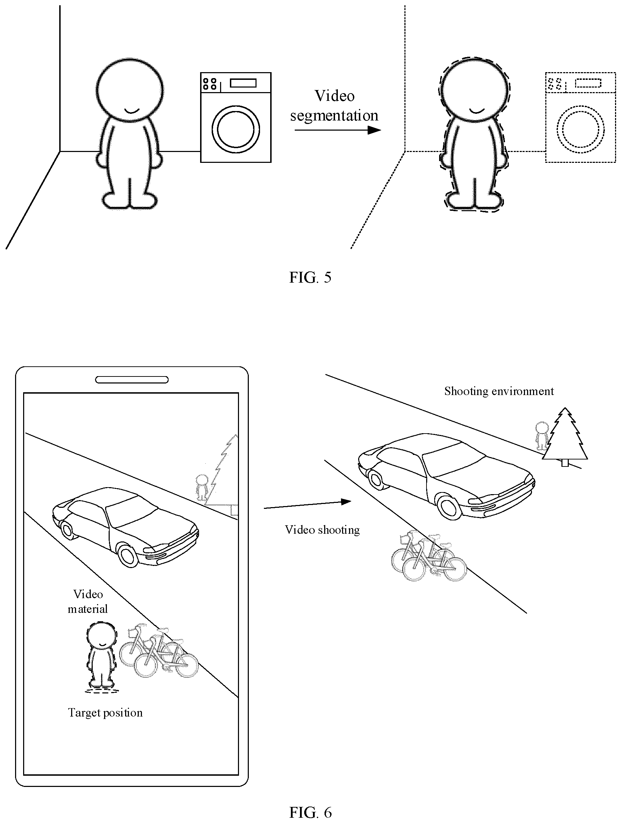

Specifically, FIG. 5 is a schematic diagram of segmenting a target object from the first video provided by an embodiment of the present disclosure. As shown in FIG. 5, after obtaining the first video, the terminal device performs a feature recognition on the target video through a video segmentation technology, that is, determining the contour of the target object in the target video, and then perform the video segmentation based on the contour of the target object to obtain the video material of the target object. Exemplarily, the video material may be a dynamic video image or a static video image, which are no specific limitations here. The specific implementation form of the video material may be seen in the example in step 5101, which will not be elaborated here.

In a possible implementation, the target object in the first video may be a portrait, the terminal device may segment the portrait from the first video to acquire the corresponding portrait video material. Specifically, this process may include recognizing the feature of the portrait contour in the first video through a video portrait segmentation (Video Portrait Segmentation) technology, determining the portrait contour, preserving the portion of the portrait in the first video based on the portrait contour, while removing the portion outside the portrait in the first video, so as to obtain the portrait video material. The specific implementation process of the video portrait segmentation may be implemented in various possible ways, which will not be elaborated here. In addition, the target object in the first video may include an object, etc., the terminal device may segment the target object from the first video to acquire the corresponding target object video material.

S103: acquiring and displaying a real scene image, where the real scene image is acquired by an image collection apparatus.

Exemplarily, the image collection apparatus may be, such as, a front-facing camera or rear camera disposed on the terminal device, or other cameras disposed outside the terminal device and communicating with the terminal device. The terminal device shoots the shooting environment by the camera, and may obtain the real scene image corresponding to the shooting environment in real-time, the real scene image is a real presentation of the shooting environment.

Furthermore, the terminal device may display the real scene image in real-time on the UI of the terminal device after acquiring the real scene image. The user may observe the real presentation of the shooting environment in real-time through the UI of the terminal device. The process of acquiring and displaying the real scene image is the preparation process before the user shoots the video, the user may perform the follow-up video shooting process by the image collection apparatus after determining the specific shooting position and shooting angle through observing the shooting environment.

S104: displaying the video material at a target position of the real scene image in an augmented manner and playing the video material.

Exemplarily, after determining the video material, the terminal device may display the video material at the target position of the real scene image, the target position may be set by the user and may be further adjusted according to the user instruction; it may also be a system default position. In a possible implementation, the displaying the video material at the target position of the real scene image including: firstly, displaying the video material in the default position, such as the geometric center of the real scene image displayed in the UI, and then, adjusting the target position according to the instruction inputted by the user, and displaying the video material in the corresponding target position based on the adjustment results, so as to achieve the user's setting and adjustment for the display position of the video material.

Furthermore, the video material is displayed at the target position of the real scene image in a manner of augmented reality (Augmented Reality, AR). Specifically, for example, the video material is a portrait video material and the content is a dancing portrait, when the video material is displayed at the target position (such as next to the sofa in the real scene image) of the real scene image (such as a user's living room image), the position relationship between the video material and the real scene image is fixed, that is, in the absence of new user instructions for changing the target position, the dancing portrait is always fixed next to the sofa; when the user moves or rotates the terminal device, the real scene image in the field of view displayed by the UI of the terminal device changes; however, the video material is fixedly displayed in a fixed position in the real scene image and does not move, that is, it is displayed in the real scene image in the manner of AR.

Furthermore, FIG. 6 is a schematic diagram of playing a video material at a target position of a real scene image provided by an embodiment of the present disclosure, as shown in FIG. 6, playing the video material after displaying the video material at the target position of the real scene image in an augmented manner, for example, the video material is a portrait video material and the content is a dancing portrait, and playing the video content of the portrait dancing. Since the video material is displayed in the real scene image in the manner of AR, that is, the video material has become a part of the shooting environment in terms of visual expression, so as to realize the purpose of building a virtual shooting environment. The user may shoot a video based on this virtual shooting environment and achieve a customized shooting content, which allowing the user to fully unleash the creative imagination without being limited by the inability to generate a required virtual shooting environment due to fixed video materials, thereby greatly improving the richness and expressiveness of the video creation.

The method includes receiving a first video; acquiring a video material by segmenting a target object from the first video; acquiring and displaying a real scene image, where the real scene image is acquired by an image collection apparatus; and displaying the video material at a target position of the real scene image in an augmented manner and playing the video material. Since the video material is acquired by receiving the first video and segmenting the target object from the first video, the video material may be set according to the needs of the user, so as to meet the purpose that the user customizes the loading and displaying of the video material, the customized video material is displayed on the real scene image in a manner of augmented reality, forming the video effect that align with the user's conception, enhancing the flexibility of the video creation, and improving the video expressiveness.

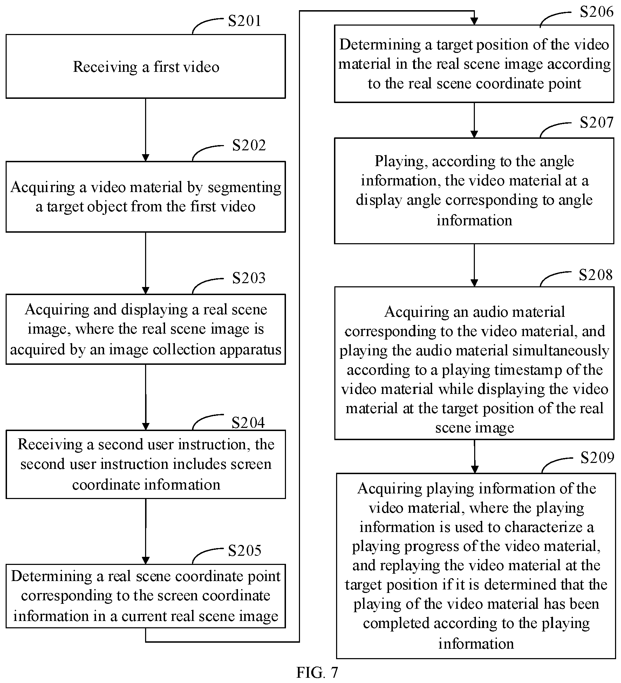

FIG. 7 is a second flow schematic diagram of a display method based on augmented reality provided by an embodiment of the present disclosure. In this embodiment, a step of adjusting the video material according to the user instruction is added, which includes the following steps.

S201: receiving a first video.

S202: acquiring a video material by segmenting a target object from the first video.

S203: acquiring and displaying a real scene image, where the real scene image is acquired by an image collection apparatus.

S204: receiving a second user instruction, the second user instruction includes screen coordinate information.

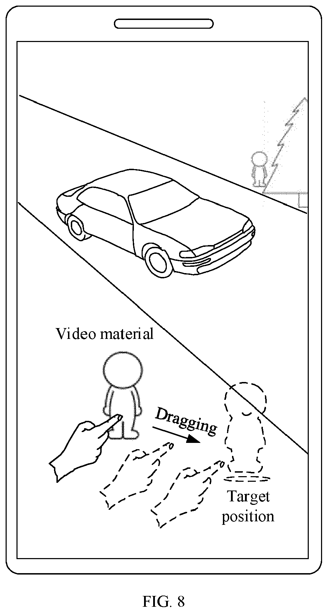

Specifically, the second user instruction is an instruction inputted by the user through the UI of the terminal device and used to display the video material in a specified position. FIG. 8 is a schematic diagram that a user inputs a second user instruction provided by an embodiment of the present disclosure, as shown in FIG. 8, the second user instruction may be achieved through a drag-and-drop gesture or click gesture of the user, where the plane coordinate information in the second user instruction characterizes the coordinates where the gesture operation are acted on the screen of the terminal device, such as the coordinates of the click gesture on the screen or the coordinates of the drag-and-drop gesture across the screen. After receiving the second user instruction, the terminal device determines the target position corresponding to the second user instruction according to the screen coordinate information, and displays the video material at the target position.

Optionally, the second user instruction further includes at least one of the following: size information and angle information. The size information is used to indicate a display size of the video material; and the angle information is used to indicate a display angle of the video material relative to an image collecting plane, where the image collection plane is a plane where the image collecting apparatus is located.

Optionally, the second user instruction may be implemented through different operation gestures. For example, the user characterizes the size information through the relative movement of the finger (such as two fingers), so as to adjust the display size of the video material, of course, the user may also characterize the angle information through the operation gesture, where the angle information is information that controls the display angle of video material, when the video material is a two-dimensional flat video, the angle information is used to characterize a display angle of the two-dimensional flat video relative to the image collection plane; when the video material is a three-dimensional stereoscopic video, the angle information is used to characterize a display angle of the three-dimensional stereoscopic video in a three-dimensional space. The operation gestures can be implemented, for example, by rotating a single finger, or by tapping, etc., the specific gestures may be set up as required, which will not be elaborated here.

S205: determining a real scene coordinate point corresponding to the screen coordinate information in a current real scene image.

After acquiring the screen coordinate information according to the second user instruction, determining the real scene coordinate point of the real scene image displayed on the screen, the real scene coordinate point corresponds to the screen coordinate information. The real scene coordinate point is used to characterize the position of the real scene in the shooting environment.

S206: determining a target position of the video material in the real scene image according to the real scene coordinate point.

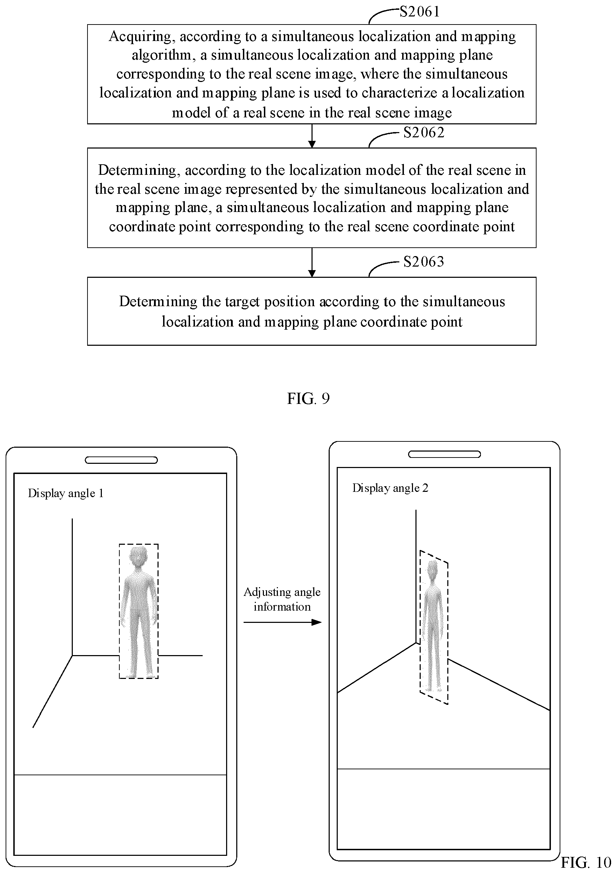

Optionally, as shown in FIG. 9, step S206 includes three specific implementation steps, S2061, S2062 and S2063.

S2061: acquiring, according to a simultaneous localization and mapping (Simultaneous Localization And Mapping, Slam) algorithm, a simultaneous localization and mapping plane corresponding to the real scene image, where the simultaneous localization and mapping plane is used to characterize a localization model of a real scene in the real scene image.

Specifically, the Slam algorithm is a method used to solve the problem of positioning, navigation, and map construction in a unknown environment, in this embodiment, the Slam algorithm is used to process the real scene image information corresponding to the shooting environment, achieve positioning between different real objects in the shooting environment, and obtain a Slam plane, which is used to characterize the position relationship between the real scene image and the real object in the shooting environment, that is, the positioning model of the real scene in the real object. The Slam algorithm and the specific implementation for generating the Slam plane through the Slam algorithm are prior art, which will not be elaborated here.

S2062: determining, according to the localization model of the real scene in the real scene image represented by the simultaneous localization and mapping plane, a simultaneous localization and mapping plane coordinate point corresponding to the real scene coordinate point.

S2063: determining the target position according to the simultaneous localization and mapping plane coordinate point.

Specifically, according to the positioning model characterized by the Slam plane, the position of the real scene coordinate point in the Slam plane, i.e., the Slam coordinate point, may be determined, and when determining the target position of the video material, the displaying of the video material in the real scene image may be achieved by using the Slam coordinate point as the target position.

S207: playing, according to the angle information, the video material at a display angle corresponding to angle information.

Specifically, the angle information is used to indicate a display angle of the video material relative to an image collection plane, where the image collection plane is a plane where the image collecting apparatus is located. Since the real scene image collected by the terminal device changes in real-time with the position and shooting angle of the terminal device, for example, after the terminal device moves or rotates at a certain angle in the three-dimensional space, the display angle of the real scene image shot and displayed by the terminal device also change, correspondingly, the display angle of the video material displayed in the real scene image will also change with it, and the video material is played at the corresponding display angle.

FIG. 10 is a schematic diagram of playing a video material at different display angles provided by an embodiment of the present disclosure, referring to FIG. 10, the video material may be a two-dimensional flat video, the display angle of the video material may be determined according to the angle information, as shown in FIG. 10, when the angle information changes, the display angle of the two-dimensional flat video material also changes correspondingly, that is, the display angle 1 in FIG. 10 changes to display angle 2, thus, achieving to adjust the display angle of the two-dimensional flat video material.

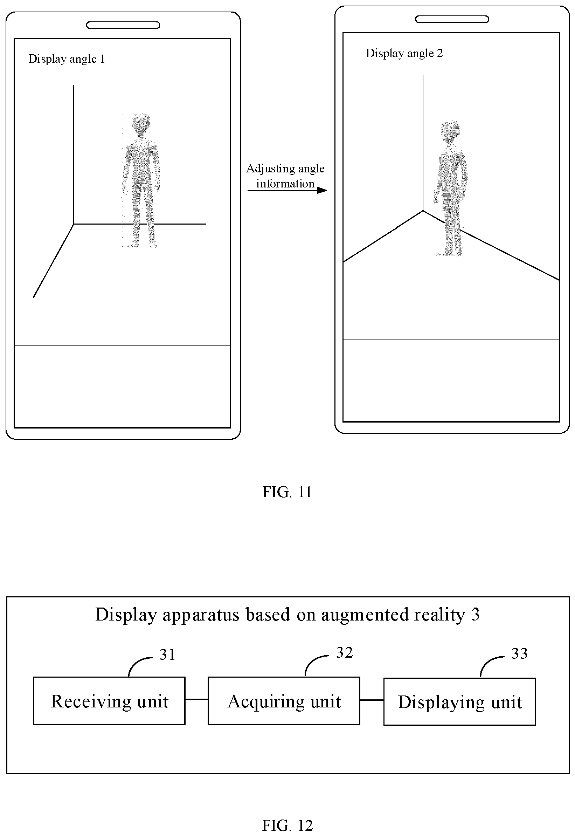

FIG. 11 is another schematic diagram of playing a video material at different display angles provided by an embodiment of the present disclosure, referring to FIG. 11, the video material may be a three-dimensional stereoscopic video, the display angle of the video material may be determined according to the angle information, as shown in FIG. 11, when the angle information changes, the display angle of the three-dimensional stereoscopic video material also changes correspondingly, that is, the display angle 1 in FIG. 11 changes to display angle 2, thus, achieving to adjust the display angle of the two-dimensional flat video material.

S208: acquiring an audio material corresponding to the video material, and playing the audio material simultaneously according to a playing timestamp of the video material while displaying the video material at the target position of the real scene image.

Exemplarily, the video material is acquired from the first video, the video material includes an audio material corresponding to the playing timestamp of the video material and having the same playing duration in the first video. The audio material may be played simultaneously with the video material according to the playing timestamp of the video material, thereby restoring the effect of the video material in the first video to a greater extent.

S209: acquiring playing information of the video material, where the playing information is used to characterize a playing progress of the video material, and replaying the video material at the target position if it is determined that the playing of the video material has been completed according to the playing information.

Exemplarily, during the playing process of the video material, according to the playing information, determining whether the playing of the video material has been completed according to the playing information of the video material, such as a current playing duration, a current playing timestamp, or identification information indicating the playing of the video material has been completed, and continuing to replay the video material if the playing of the video material has been completed, so as to avoid the overall performance effect of the video resulted by stopping the playing of the video material.

In the embodiment, the steps S201-S203 are consistent with the steps S101-S103 in the above embodiments, for detailed discussions, please refer to the discussion in steps S101-S103, which will not be elaborated here.

Corresponding to the display method based on augmented reality of the above embodiments, FIG. 12 is a structural block diagram of a display apparatus based on augmented reality provided by an embodiment of the present disclosure. For the ease of explanation, only parts related to the embodiments of the present disclosure are shown. Referring to FIG. 12, the display apparatus based on augmented reality 3 includes:
a receiving unit 31, configured to receive a first video.
an acquiring unit 32, configured to acquire a video material by segmenting a target object from the first video.
a displaying unit 33, configured to acquire and display a real scene image, and display the video material at a target position of the real scene image in an augmented manner and play the video material, where the real scene image is acquired by an image collection apparatus.

In one embodiment of the present disclosure, the video material includes a portrait video material, the portrait video material is obtained by performing video portrait segmentation on the first video.

In one embodiment of the present disclosure, the receiving unit 31 is further configured to: receive a second user instruction, where the second user instruction includes screen coordinate information; determine a real scene coordinate point corresponding to the screen coordinate information in a current real scene image; and determine the target position of the video material in the real scene image according to the real scene coordinate point.

In one embodiment of the present disclosure, the second user instruction further includes at least one of the following: size information and angle information; where the size information is used to indicate a display size of the video material; and the angle information is used to indicate a display angle of the video material relative to an image collection plane, where the image collection plane is a plane where the image collecting apparatus is located.

In one embodiment of the present disclosure, when playing the video material, the displaying unit 33 is specifically configured to play, according to the angle information, the video material at a display angle corresponding to the angle information.

In one embodiment of the present disclosure, when determining the target position of the video material in the real scene image according to the real scene coordinate point, the receiving unit 31 is specifically configured to: acquire, according to a simultaneous localization and mapping algorithm, a simultaneous localization and mapping plane corresponding to the real scene image, where the simultaneous localization and mapping plane is used to characterize a localization model of a real scene in the real scene image; determine, according to the localization model of the real scene in the real scene image represented by the simultaneous localization and mapping plane, a simultaneous localization and mapping plane coordinate point corresponding to the real scene coordinate point; and determine the target position according to the simultaneous localization and mapping plane coordinate point.

In one embodiment of the present disclosure, the acquiring unit 32 is further configured to: acquire an audio material corresponding to the video material; and play the audio material simultaneously according to a playing timestamp of the video material while displaying the video material at the target position of the real scene image.

In one embodiment of the present disclosure, the acquiring unit 32 is further configured to: acquire playing information of the video material, where the playing information is used to characterize a playing progress of the video material; and replay the video material at the target position if it is determined that the playing of the video material has been completed according to the playing information.

The device provided in the embodiment may be used to execute the technical solution of the above method embodiment, and the implementation principles and technical effects therebetween are similar, which will not be repeated in this embodiment.

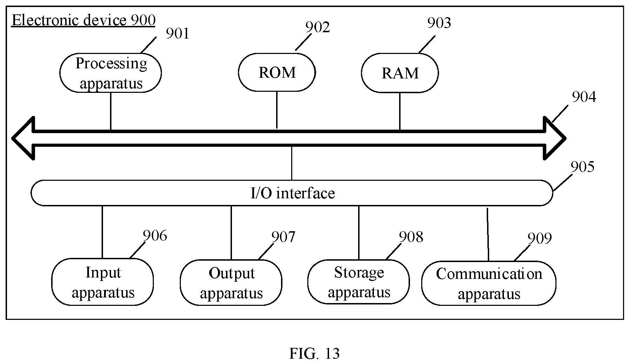

Referring to FIG. 13, which illustrates a structural schematic diagram of an electronic device 900 suitable for implementing an embodiment of the present disclosure, the electronic device 900 may be a terminal device or a server. The terminal device may include but are not limited to mobile terminals such as a mobile phone, a laptop, a digital broadcast receiver, a personal digital assistant (Personal Digital Assistant, PDA), a portable Android device (Portable Android Device, PAD), a portable media player (Portable Media Player, PMP), a vehicle terminal (such as a vehicle navigation terminal), a wearable electronic device, etc., and fixed terminals such as a digital TV, a desktop computer, a smart home device, etc. The electronic device shown in FIG. 13 is only an example, and there should be no limitations on the function and scope of use of the embodiments of the present disclosure.

As shown in FIG. 13, the electronic device 900 may include a processing apparatus 901 (such as a central processing unit, a graphics processing unit, etc.), which may perform various appropriate actions and processing according to a computer program stored in a read-only memory (Read Only Memory, ROM) 902 or a computer program loaded into a random access memory (Random Access Memory, RAM) 903 from a storage apparatus 908, for example, be use for performing the program code of the method shown in the flowchart to achieve the aforementioned functions defined in the method of the embodiments of the present disclosure. Various programs and data required for the operation of the electronic device 900 may also be stored in the RAM 903. The processing apparatus 901, the ROM 902, and the RAM 903 are connected to each other through a bus 904. An input/output (I/O) interface 905 is also connected to the bus 904.

In general, the following apparatus may be connected to the I/O interface 905, including: an input apparatus 906, such as a touchscreen, a touchpad, a keyboard, a mouse, a camera, a microphone, an accelerometer, a gyrometer, etc.; an output apparatus 907, such as a liquid crystal display (Liquid Crystal Display, LCD), a speaker, a shaker, etc.; a storage apparatus 908, such as a magnetic disk, a hard disk, etc.; and a communication apparatus 909. The communication apparatus 909 allows the electronic device 900 to exchange data with other devices through a wireless or wire communication. Although FIG. 13 shows the electronic device 900 with various devices, it should be understood that it is not required to implement or provide all the apparatus shown. More or fewer apparatus may alternatively be implemented or provided.

In particular, according to the embodiment of the present disclosure, the process described above with reference to the flowchart may be implemented as a computer software program. For example, embodiments of the present disclosure include a computer program product, which includes a computer program loaded on a computer readable medium, and the computer program includes program code for executing the method shown in a flowchart. In such an embodiment, the computer program may be downloaded and installed from the network through the communication apparatus 909, or installed from the storage apparatus 908, or installed from the ROM 902. When the computer program is executed by the processing apparatus 901, the above functions defined in the method of the embodiment of the present disclosure are executed.

The embodiment of the present disclosure further provides a computer program stored in a readable storage medium, one or more processors of an electronic device may read the computer program from the readable storage medium, the one or more processors execute the computer program to enable the electronic device to execute the solution provided by any of the above embodiments.

It should be noted that the computer readable medium described in the present disclosure may be a computer readable signal medium, a computer readable storage medium, or any combination of the above two. The computer readable storage medium may be, for example, but not limited to, an electrical, magnetic, optical, electromagnetic, infrared, or semiconductor system, apparatus, or device, or any combination the foregoing. More specific examples of the computer readable storage medium may include, but are not limited to: an electrical connection with one or more wires, a portable computer disk, a hard disk, a random access memory (RAM), a read-only memory (ROM), an erasable programmable read only memory (Erasable Programmable Read-Only Memory, EPROM or flash memory), a fiber optic, a portable compact disk read-only memory (Portable Compact Disk Read-Only Memory, CD-ROM), an optical storage device, a magnetic storage device, or any suitable combination of the foregoing. In the present disclosure, a computer readable storage medium may be any tangible medium containing or storing a program, which may be used by or in combination with an instruction execution system, apparatus, or device. And in the present disclosure, the computer readable signal medium may include data signals transmitted in the baseband or as part of the carrier, in which computer readable program code is carried. Such transmitted data signals may take various forms, including but not limited to electromagnetic signals, optical signals or any suitable combination of the above. The computer readable signal medium may also be any computer readable medium other than the computer readable storage medium, which may transmit, propagate, or transmit programs for use by or in combination with an instruction execution system, apparatus, or device. The program code contained on the computer readable medium may be transmitted using any suitable medium, including an electrical wire, an optical fiber cable, RF (Radio Frequency, radio frequency), etc., or any suitable combination of the foregoing.

The above computer readable medium may be embodied in the above electronic device; and may also exist alone without being assembled into the electronic device.

The above computer readable medium carries one or more programs which, when executed by the electronic device, enables the electronic device to execute the method illustrated in the above embodiments.

The computer program code for implementing operations in the embodiments of the present disclosure may be written in one or more programming languages or the combination thereof, including object-oriented programming languages-such as Java, Smalltalk, C++, and conventional procedural programming languages-such as the "C" language or similar programming languages. The program code may execute entirely on the user's computer, partly on the user's computer, as a stand-alone software package, partly on the user's computer and partly on a remote computer, or entirely on the remote computer or server. In the scenario involving the remote computer, the remote computer may be connected to the user's computer through any type of network, including a local area network (Local Area Network, LAN) or a wide area network (Wide Area Network, WAN), or the connection may be made to an external computer (for example, through the Internet using an Internet Service Provider).

The flowcharts and block diagrams in the accompanying drawings illustrate the architecture, functionality, and operations of possible implementations of systems, methods, and computer program products according to various embodiments of the present disclosure. In this regard, each block in the flowchart or block diagrams may represent a module, a program segment, or a portion of code, which includes one or more executable instructions for implementing the specified logical functions. It should also be noted that, in some alternative implementations, the functions noted in the blocks may occur out of the order noted in the drawing. For example, two blocks shown in succession may, in fact, be executed substantially in parallel, or the blocks may also sometimes be executed in the reverse order, depending on the functions involved. It is also noted that each block in the block diagrams and/or flowcharts, and a combination of the blocks may be implemented by a dedicated hardware-based system for performing specified functions or operations, or by a combination of dedicated hardware and computer instructions.

The involved units described in the embodiments of the present disclosure may be implemented in a software manner, and may also be implemented in a hardware manner. The name of the unit does not constitute a limitation of the unit itself in some cases, for example, a first obtaining unit may also be described as "obtaining a unit of at least two IP addresses".

The functions described in the embodiments of the present disclosure may be executed, at least in part, by one or more hardware logic components. For example, unrestrictedly, exemplary types of hardware logic components that may be used include: a field-programmable gate array (Field-Programmable Gate Array, FPGA), an application specific integrated circuit (Application Specific Integrated Circuit, ASIC), an application specific standard product (Application Specific Standard Product, ASSP), a system on chip (System-on-a-chip, SOC), a complex programmable logic device (Complex Programmable Logic Device, CPLD) and so on.

In the context of the present disclosure, a machine readable medium may be a tangible medium that may contain or store a program for use by or in combination with an instruction execution system, apparatus, or device. The machine readable medium may be a machine readable signal medium or a machine readable storage medium. The machine readable storage media may include, but is not limited to an electrical, magnetic, optical, electromagnetic, infrared, or semiconductor system, apparatus, or device, or any suitable combination of the foregoing. More specific examples of the machine readable storage medium may include an electrical connection with one or more wires, a portable computer disk, a hard disk, a random access memory (RAM), a read-only memory (ROM), an erasable programmable read only memory (EPROM or a flash memory), a fiber optic, a portable compact disk read-only memory (CD-ROM), an optical storage device, a magnetic storage device, or any suitable combination of the foregoing. In a first aspect, a display method based on augmented reality is provided according to one or more embodiments of the present disclosure, including:
receiving a first video; acquiring a video material by segmenting a target object from the first video; acquiring and displaying a real scene image, where the real scene image is acquired by an image collection apparatus; and displaying the video material at a target position of the real scene image in an augmented manner and playing the video material.

According to one or more embodiments of the present disclosure, the video material includes a portrait video material, the portrait video material is obtained by performing video portrait segmentation on the first video.

According to one or more embodiments of the present disclosure, further including: receiving a second user instruction, where the second user instruction includes screen coordinate information; determining a real scene coordinate point corresponding to the screen coordinate information in a current real scene image; and determining the target position of the video material in the real scene image according to the real scene coordinate point.

According to one or more embodiments of the present disclosure, the second user instruction further includes at least one of the following: size information and angle information; where the size information is used to indicate a display size of the video material; and the angle information is used to indicate a display angle of the video material relative to an image collection plane, where the image collection plane is a plane where the image collecting apparatus is located.

According to one or more embodiments of the present disclosure, the playing the video material includes:
playing, according to the angle information, the video material at a display angle corresponding to the angle information.

According to one or more embodiments of the present disclosure, the determining the target position of the video material in the real scene image according to the real scene coordinate point includes:
acquiring, according to a simultaneous localization and mapping algorithm, a simultaneous localization and mapping plane corresponding to the real scene image, where the simultaneous localization and mapping plane is used to characterize a localization model of a real scene in the real scene image; determining, according to the localization model of the real scene in the real scene image represented by the simultaneous localization and mapping plane, a simultaneous localization and mapping plane coordinate point corresponding to the real scene coordinate point; and determining the target position according to the simultaneous localization and mapping plane coordinate point.

According to one or more embodiments of the present disclosure, the method further includes: acquiring an audio material corresponding to the video material; and playing the audio material simultaneously according to a playing timestamp of the video material while displaying the video material at the target position of the real scene image.

According to one or more embodiments of the present disclosure, the method further includes: acquiring playing information of the video material, where the playing information is used to characterize a playing progress of the video material; and replaying the video material at the target position if it is determined that the playing of the video material has been completed according to the playing information.

In a second aspect, a display apparatus based on augmented reality is provided according to one or more embodiments of the present disclosure, including:
a receiving unit, configured to receive a first video.
an acquiring unit, configured to acquire a video material by segmenting a target object from the first video.
a displaying unit, configured to acquire and display a real scene image, and display the video material at a target position of the real scene image in an augmented manner and play the video material, where the real scene image is acquired by an image collection apparatus.

According to one or more embodiments of the present disclosure, the video material includes a portrait video material, the portrait video material is obtained by performing video portrait segmentation on the first video.

According to one or more embodiments of the present disclosure, the receiving unit is further configured to: receive a second user instruction, where the second user instruction includes screen coordinate information; determine a real scene coordinate point corresponding to the screen coordinate information in a current real scene image; and determine the target position of the video material in the real scene image according to the real scene coordinate point.

According to one or more embodiments of the present disclosure, the second user instruction further includes at least one of the following: size information and angle information; where the size information is used to indicate a display size of the video material; and the angle information is used to indicate a display angle of the video material relative to an image collection plane, where the image collection plane is a plane where the image collecting apparatus is located.

According to one or more embodiments of the present disclosure, when playing the video material, the displaying unit is specifically configured to play, according to the angle information, the video material at a display angle corresponding to the angle information.

According to one or more embodiments of the present disclosure, when determining the target position of the video material in the real scene image according to the real scene coordinate point, the receiving unit is specifically configured to: acquire, according to a simultaneous localization and mapping algorithm, a simultaneous localization and mapping plane corresponding to the real scene image, where the simultaneous localization and mapping plane is used to characterize a localization model of a real scene in the real scene image; determine, according to the localization model of the real scene in the real scene image represented by the simultaneous localization and mapping plane, a simultaneous localization and mapping plane coordinate point corresponding to the real scene coordinate point; and determine the target position according to the simultaneous localization and mapping plane coordinate point.

According to one or more embodiments of the present disclosure, the acquiring unit is further configured to: acquire an audio material corresponding to the video material; and play the audio material simultaneously according to a playing timestamp of the video material while displaying the video material at the target position of the real scene image.

According to one or more embodiments of the present disclosure, the acquiring unit is further configured to: acquire playing information of the video material, where the playing information is used to characterize a playing progress of the video material; and replay the video material at the target position if it is determined that the playing of the video material has been completed according to the playing information.

In a third aspect, an electronic device is provided according to one or more embodiments of the present disclosure, including: at least one processor and memory;
the memory has a computer-executable instruction stored therein;
the at least one processor executes the computer-executable instruction stored in the memory to enable the at least one processor to perform the display method based on augmented reality described in the first aspect above and various possible designs of the first aspect.

In a fourth aspect, a computer readable storage medium is provided according to one or more embodiments of the present disclosure, the computer readable storage medium stores a computer-executable instruction, when the computer-executable instruction is executed by a processor, the display method based on augmented reality described in the first aspect above and various possible designs of the first aspect is implemented.

In a fifth aspect, a computer program product according to one or more embodiments of the present disclosure, which including a computer program, when the computer program is executed by a processor, the display method based on augmented reality described in the first aspect above and various possible designs of the first aspect is implemented.

In a sixth aspect, a computer program according to one or more embodiments of the present disclosure, when the computer program is executed by a processor, the display method based on augmented reality described in the first aspect above and various possible designs of the first aspect is implemented.

The above description is merely better embodiments of the present disclosure and explanations of the technical principles employed. Those skilled in the art should understand that the scope of disclosure involved in the present disclosure is not limited to the technical solutions formed by the specific combination of the above technical features, and should also cover, without departing from the above disclosed concept, other technical solutions formed by any combination of the above technical features or their equivalent features. For example, a technical solution formed by replacing the above features with technical features that have similar functions to those disclosed in the present disclosure (but not limited to).

Additionally, although each operation is depicted in a particular order, which should not be understood as requiring that the operations should be performed in the particular order shown or in a sequential order. Multitask and parallel processing may be advantageous under certain circumstances. Likewise, although the above discussion contains several specific implementation details, those should not be construed as limitations on the scope of the present disclosure. Certain features described in the context of separate embodiments may also be implemented in combination in a single embodiment. Conversely, various features described in the context of a single embodiment may also be implemented in multiple embodiments separately or in any suitable sub-combination.

Although the subject matter has been described in language specific to structural features and/or method logic actions, it should be understood that the subject matter defined in the appended claims is not necessarily limited to the specific features or actions described above. Rather, the specific features and actions described above are merely example forms for implementing the claims.

## Claims

1. A display method based on augmented reality, comprising:
receiving a first video;
acquiring a video material by segmenting a target object from the first video;
acquiring and displaying a real scene image, wherein the real scene image is acquired by an image collection apparatus; and
displaying the video material at a target position of the real scene image in an augmented manner and playing the video material.

2. The method according to claim 1, wherein the video material comprises a portrait video material, the portrait video material is obtained by performing video portrait segmentation on the first video.

3. The method according to claim 1, further comprising:
receiving a second user instruction, wherein the second user instruction comprises screen coordinate information;
determining a real scene coordinate point corresponding to the screen coordinate information in a current real scene image; and
determining the target position of the video material in the real scene image according to the real scene coordinate point.

4. The method according to claim 3, wherein the second user instruction further comprises at least one of the following: size information and angle information;
wherein the size information is used to indicate a display size of the video material; and
the angle information is used to indicate a display angle of the video material relative to an image collection plane, wherein the image collection plane is a plane where the image collecting apparatus is located.

5. The method according to claim 4, wherein the playing the video material comprises:
playing, according to the angle information, the video material at a display angle corresponding to the angle information.

6. The method according to claim 3, wherein the determining the target position of the video material in the real scene image according to the real scene coordinate point comprises:
acquiring, according to a simultaneous localization and mapping algorithm, a simultaneous localization and mapping plane corresponding to the real scene image, wherein the simultaneous localization and mapping plane is used to characterize a localization model of a real scene in the real scene image;
determining, according to the localization model of the real scene in the real scene image represented by the simultaneous localization and mapping plane, a simultaneous localization and mapping plane coordinate point corresponding to the real scene coordinate point; and
determining the target position according to the simultaneous localization and mapping plane coordinate point.

7. The method according to any one of claims 1 to 6, further comprising:
acquiring an audio material corresponding to the video material; and
playing the audio material simultaneously according to a playing timestamp of the video material while displaying the video material at the target position of the real scene image.

8. The method according to any one of claims 1 to 6, further comprising:
acquiring playing information of the video material, wherein the playing information is used to characterize a playing progress of the video material; and
replaying the video material at the target position if it is determined that the playing of the video material has been completed according to the playing information.

9. A display apparatus based on augmented reality, comprising:
a receiving unit, configured to receive a first video;
an acquiring unit, configured to acquire a video material by segmenting a target object from the first video; and
a displaying unit, configured to acquire and display a real scene image, and display the video material at a target position of the real scene image in an augmented manner and play the video material, wherein the real scene image is acquired by an image collection apparatus.

10. An electronic device, comprising at least one processor and memory;
wherein the memory has a computer-executable instruction stored therein;
the at least one processor executes the computer-executable instruction stored in the memory to enable the at least one processor to perform the display method based on augmented reality according to any one of claims 1 to 8.

11. A computer readable storage medium storing a computer-executable instruction, wherein when the computer-executable instruction is executed by a processor, the display method based on augmented reality according to any one of claims 1 to 8 is implemented.

12. A computer program product comprising a computer program, wherein when the computer program is executed by a processor, the display method based on augmented reality according to any one of claims 1 to 8 is implemented.

13. A computer program, wherein when the computer program is executed by a processor, the display method based on augmented reality according to any one of claims 1 to 8 is implemented.
